Europäisches Patentamt

European Patent Office

Office européen des brevets

(11) Veröffentlichungsnummer: **0 222 417**
**A2**

(12) # EUROPÄISCHE PATENTANMELDUNG

(21) Anmeldenummer: 86116423.4

(22) Anmeldetag: 18.09.84

(51) Int. Cl.⁴: **B 01 D 59/00**
**B 60 H 3/06**

(30) Priorität: 10.11.83 DE 3340667

(43) Veröffentlichungstag der Anmeldung:
20.05.87 Patentblatt 87/21

(84) Benannte Vertragsstaaten:
AT BE CH DE FR GB LI LU NL SE

(60) Veröffentlichungsnummer der früheren
Anmeldung nach Art. 76 EPÜ: **0 160 010**

(71) Anmelder: Hölter, Heinz, Dipl.-Ing.
Beisenstrasse 39-41
D-4390 Gladbeck(DE)

(72) Erfinder: Hölter, Heinz, Dipl.-Ing.
Beisenstrasse 39-41
D-4390 Gladbeck(DE)

(72) Erfinder: Igelbüscher, Heinrich, Dipl.-Ing.
Marcq-en-Baroeul-Strasse 60
D-4390 Gladbeck(DE)

(72) Erfinder: Gresch, Heinrich, Ing. (grad.)
Franz-Lehàr-Strasse 25
D-4600 Dortmund-Wickede(DE)

(72) Erfinder: Dewert, Heribert, Dipl.-Ing.
Bahnhofstrasse 23
D-4390 Gladbeck(DE)

(74) Vertreter: Spalthoff, Adolf, Dipl.-Ing.
Pelmanstrasse 31 P.O. Box 34 02 20
D-4300 Essen 1(DE)

(54) Peltiertechnik für das Erwärmen von Chemisorptionsmassen, vorzugsweise für Arbeitsschutz- und Autofilter.

(57) Es ist bekannt, die angesaugte Luft vor dem Durchgang durch Chemisorptionsmassen anzuwärmen und nach dem Durchgang wieder abzukühlen, um sie als gereinigte Atemluft mit erträglichen Temperaturen zu nutzen. Die Erwärmung bzw. Abkühlung geschieht mittels Peltierelementen (2), deren Oberseiten mittels einer zu erwärmenden Wärmetauscherplatte (1) und deren Unterseiten mittels einer der Abkühlung dienenden Wärmetauscherplatte (3) belegt sind. Um zu verhindern, daß die Kaltplatte (3) gegenüber der Warmplatte (1) eine erhebliche Kontraktion im Arbeitsbereich ausführt, wird erfindungsgemäß vorgeschlagen, daß die Kaltplatte (3) durchgehend und die Warmplatte (1) mindestens zweifach geteilt ausgeführt ist. Die Warmplatte (1) kann unterschiedliche Teilungen aufweisen und durch die Verbindung der oberen mit der unteren Wärmetauscherplatte als Blockeinheit ausgebildet sein.

Abb.B

PATENTANWALT DIPL.-ING. ADOLF SPALTHOFF

D-4300 Essen 1 · Pelmanstraße 31 · Postfach 340220 · Telefon (0201) 772008

**0222417**

"Peltiertechnik für das Erwärmen von Chemisorptionsmassen, vorzugsweise für Arbeitsschutz- und Autofilter"

Es ist bekannt, die angesaugte Luft vor dem Durchgang
durch Chemisorptionsmassen anzuwärmen und nach dem Durchgang durch die Chemisorptionsmassen wieder abzukühlen,
um sie als gereinigte Atemluft mit erträglichen Temperaturen zu nutzen.

Für diese Aufgabenstellung werden vielfach Peltierelemente mit den hierfür erforderlichen Kühlflächen auf der Warm-
und Kaltseite verwendet.

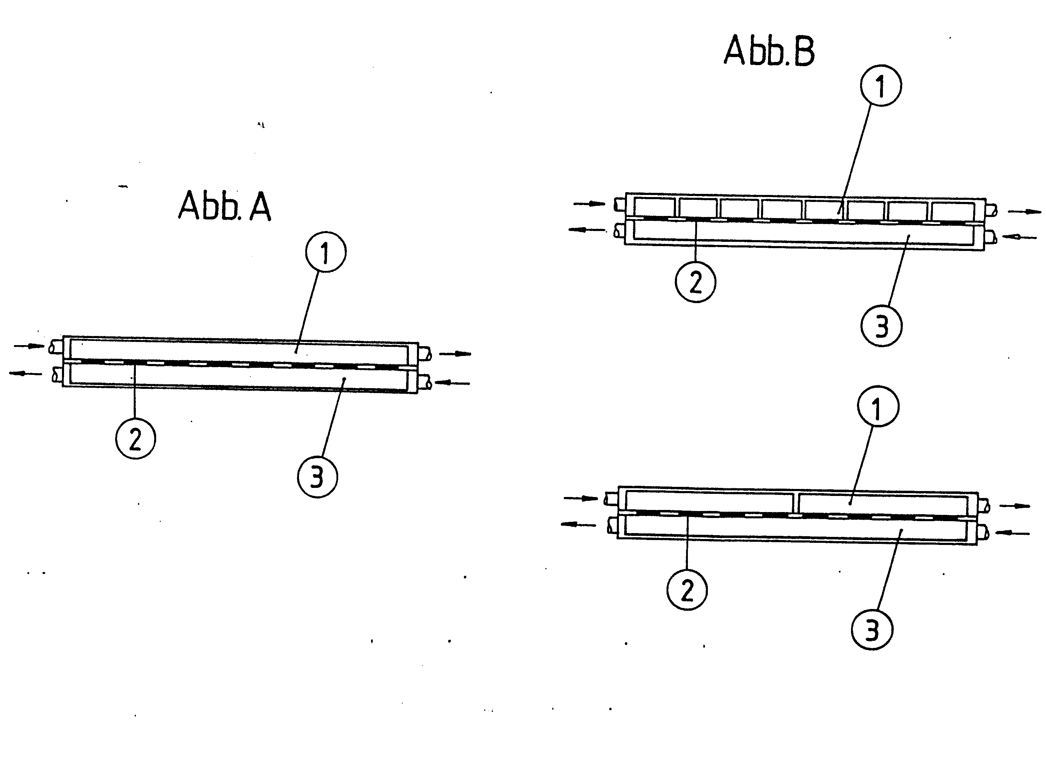

In der beiliegenden Zeichnung ist eine solche Peltiertechnik dargestellt.

Abbildung A zeigt mit 1 die zu erwärmende Wärmetauscherplatte, mit 2 einzelne Peltierelemente (8 Stück), mit
3 die untere Wärmetauscherplatte der Peltiertechnik,
die sogenannte Kühlseite im Gegensatz zur oberen Warmseite 1.

Dresdner Bank Essen 403 349 800 (BLZ 360 800 80) Sparkasse Essen

In Abbildung B ist genauso wie in der Abbildung A die Peltiertechnik dargestellt, wobei erfindungsgemäß die obere Warmplatte 1, auch Wärmetauscherelement genannt, quergestellt in gleiche Abschnitte mit einem oder mehreren Millimetern Zwischenspalten, ausgebildet ist. Die untere Platte 3 bleibt ungeteilt.

Diese erfindungsgemäße Ausführung hat folgende Aufgabenstellung:

Es ist bekannt, daß z.B. Aluminium-Wärmetauscher-Elemente vielfach in der Peltiertechnik angewandt werden, welche ein sehr leichtes Gewicht und eine gute Wärmeleitfähigkeit haben, jedoch z.B. bei 50 – 60 Grad C schon eine erhebliche Längenausdehnung aufweisen.

Das hat zur Folge, daß die Kaltplatte 3 gegenüber der Warmplatte 1 eine erhebliche Kontraktion im Arbeitsbereich aufweist, die zu laufenden ungewollten Verschiebungen gegenüber den eingelagerten Peltierelementen führt, und somit die Verfügbarkeit dieser Technik durch einen zwangsläufig auftretenden Verschleiß in den Übergangsstellen nicht gewährleistet ist.

Dresdner Bank Essen 403 349 800 (BLZ 360 800 80) · Sparkasse Essen 209 130 (BLZ 360 50105) · Postgiro Essen 335 07-433 (BLZ 360 100 43)

**0222417**

- 3 -

Um diese Verschiebungen zu vermeiden wird erfindungsgemäß vorgeschlagen, die in der Abbildung B dargestellte Kaltplatte 3 durchgehend und die Warmplatte 1 geteilt bzw. mehrfach geteilt auszuführen, so daß Verschiebungen zwischen den Wärmetauscherplatten und den Peltierelementen auf ein Minimum reduziert werden.

Erfindungsgemäß kann bei größeren Längen die Warmseite in unterschiedlich geteilter Länge ausgeführt sein, so daß die Längenausdehnung für die oberen Teilelemente jeweils auf ein Minimum für den jeweiligen Verlagerungsbereich der anteiligen Peltierelemente erzielt wird.

Selbstverständlich ist die Erfindung nicht auf die vorstehend im einzelnen dargestellten und beschriebenen Ausbildungsformen beschränkt, sondern es sind zahlreiche Abänderungen möglich, ohne jedoch von dem Grundgedanken abzuweichen, eine Peltiertechnik, vorzugsweise für das Heizen und Kühlen von Chemisorptionsmassen für Arbeitsschutz- und Autofilter so zu gestalten, daß die Wärmetauscherplatten mit den Peltierelementen einseitig unterteilt sind, vorzugsweise mehrfach, so daß sie zwar mit der Kaltseite eine Einheit bilden, jedoch gleichzeitig ein Längenausgleich auf der Warmseite stattfinden kann.

Dresdner Bank Essen 403 349 800 (BLZ 360 800 80) · Sparkasse Essen 209 130 (BLZ 360 50 105) · Postgiro Essen 335 07-433 (BLZ 360 100

D-4300 Essen 1 · Pelmanstraße 31 · Postfach 34 02 20 · Telefon (0201) 77 20 08

**0222417**

— 4 —

Durch die unterschiedliche Teilung der Wärmetauscherplatte 1 bleibt trotzdem durch die Verbindungselemente
die Blockbauweise erhalten.

sdner Bank Essen 403 349 800 (BLZ 360 800 80) · Sparkasse Essen 209 130 (BLZ 360 50105) · Postgiro Essen 335 07-433 (BLZ 360 100 43)

# PATENTANWALT DIPL.-ING. ADOLF SPALTHOFF
D-4300 Essen 1 · Pelmanstraße 31 · Postfach 34 02 20 · Telefon (0201) 77 20 08

**0222417**

P A T E N T A N S P R Ü C H E :

1. Peltiertechnik, vorzugsweise zum Erwärmen und Kühlen von Atemluft, dadurch gekennzeichnet, daß die Wärmetauscherplatten, die die Peltierelemente begrenzen, nicht als je ein Wärmetauscherplattenstück ausgebildet sind, sondern, in mehrere Teilabschnitte unterteilt, miteinander verbunden werden.

2. Vorrichtung nach Anspruch 1, dadurch gekennzeichnet, daß die obere Wärmetauscherplatte unterschiedliche Teilungen aufweist und durch die Verbindung der oberen mit der unteren Wärmetauscherplatte als Blockeinheit ausgebildet ist.

Dresdner Bank Essen 403 349 800 (BLZ 360 800 80) · Sparkasse Essen 209 130 (BLZ 360 501 05) · Postgiro Essen 335 07-433 (BLZ 360 100 43)

Abb.B

Abb.A